# EUROPEAN PATENT APPLICATION

(11) **EP 1 633 141 A2**
(43) Date of publication of application: **08.03.2006**
(21) Application number: 05017673.4
(22) Date of filing: 12.08.2005
(51) Int. Cl.: H04N 7/14, H04N 7/15

(54) **Call processing apparatus and method in video communication network**

(30) Priority: 03.09.2004 KR 2004070546
(71) Applicant: Samsung Electronics Co, Ltd, Suwon-si, Gyeonggi-do (KR)
(72) Inventor: Sung, Jung-Sic 113-1402, Yeonwon-maeul, Yongin-si Gyeonggi-do (KR)
(74) Representative: Lang, Johannes

(57) **Abstract**

Call processing apparatus and method in a video communication network of the present invention transmits real-time dynamic or still image data of a caller to a receiving terminal when a ring signal is generated to the receiving video terminal in the call connection between the receiving video terminal and an calling video terminal, so that the receiving terminal display the image data thereon, by which a receiver can easily identify an actual caller based upon the displayed dynamic or still image of the caller to selectively enable a call connection with the identified caller. In this fashion, the present invention can promote the convenience of users.

## Description

### BACKGROUND OF THE INVENTION

### 1. Field of the Invention

The present invention relates to call processing apparatus and method in a video communication network, more particularly, capable of displaying actual image data of a caller in real time during the use of a video terminal so that a receiver can examine the displayed image data of the caller to selectively enable or disable call connection.

### 2. Description of the Related Art

In general, wired and wireless communication systems provide a Caller ID (CID) service based upon user selection. That is, when a terminal subscribed to the CID service receives a call, the telephone number of an originating terminal is displayed on the receiving terminal. Therefore, a user of the receiving terminal can decide whether or not to enable call connection based upon the caller telephone number displayed on the receiving terminal.

However, the above CID service has following drawbacks: Since the receiving terminal user or receiver can decide whether or not to enable the call connection only based upon the caller telephone number displayed on the receiving terminal, the receiver cannot correctly identify the caller when the telephone number of the originating terminal is not known, the originating terminal is operated by a person who is not the owner of the originating terminal or the caller blocks the CID function.

As a result, since the caller is judged based upon the CID or caller name, the receiver cannot correctly identify the caller based upon CID information when the caller originates the call with another's terminal. In addition, where a terminal is shared by several people, the receiver can identify the terminal or roughly the position but cannot correctly identify the caller.

As an approach to solve the foregoing problems, Korean Patent Application Publication 2003-12745 discloses a CID method in a video terminal as shown in FIG. 1.

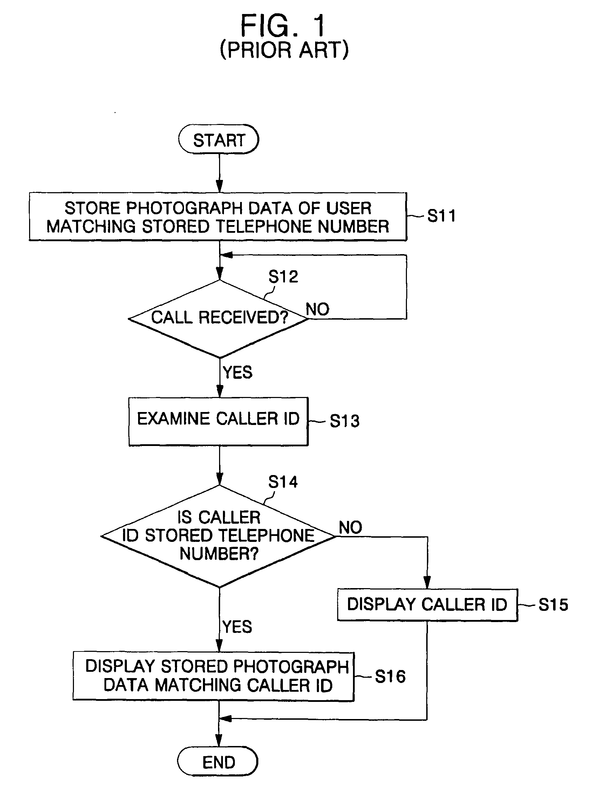

The CID method disclosed in the foregoing document will be described in brief with reference to FIG. 1, which is a flowchart illustrating a conventional CID process in a video terminal.

As shown in FIG. 1, photograph data (such as still images) are stored in a terminal to match telephone numbers stored in the terminal in S11.

After the photograph data is stored matching the telephone numbers, upon receiving a call in S12, a processor reads a CID from the received call in S13 and judges whether or not the read CID is identical with any of the stored telephone numbers in S14.

As a result of the judgment, if the CID is identical with one of the stored telephone numbers, the processor displays on the terminal the photograph data corresponding to the identical telephone number in S16.

If the CID is not identical to any of the stored telephone numbers, the processor displays the CID only on the terminal in S 15.

However, there is a problem in that this CID method can be applied to only those callers whose photograph data matching telephone numbers are registered but cannot be applied to those callers whose telephone numbers are not registered or whose photograph data are not registered even if their telephone numbers are registered.

As an improvement to solve the foregoing problems, Korean Patent Application Publication 2003-23223 proposes a "Device and Method for Furnishing Image of Originating Party to Video Phone Terminal."

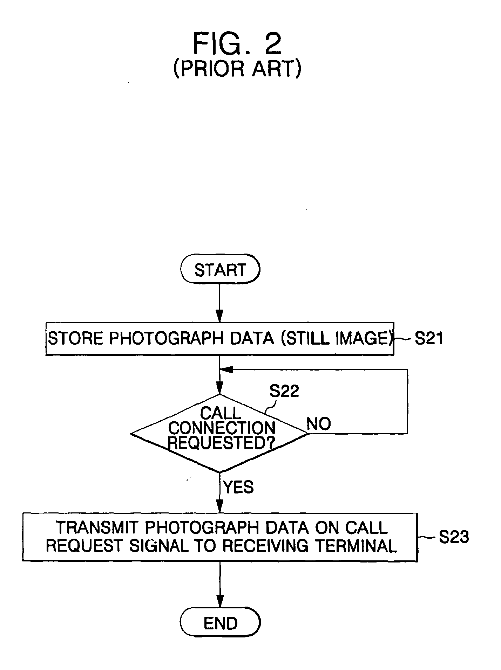

The above approach will be described in brief with reference to FIG. 2, which is a flowchart illustrating a conventional method for providing a caller image in a video terminal.

As shown in FIG. 2, photograph data of a caller is previously stored in a terminal of the caller in S21.

After the photograph data is stored in the terminal, when the caller requests a call connection by originating a call connection request signal to a receiving terminal in S22, the photograph data is transmitted on the call request signal toward the receiving terminal in S23.

Then, the receiving terminal displays the photograph data of the caller so that the call connection can be enabled or not after verification of the displayed photograph data. That is, when the calling terminal originates the call connection request signal, the photograph data which is previously stored in the calling terminal is attached to the call connection request signal.

However, this method has a problem in that if the originating terminal does not attach the photograph data to the call connection request signal or the originating terminal is operated by a person who is not the owner of the originating terminal, the receiver cannot correctly identify the caller based upon the photograph data displayed on the receiving terminal.

### SUMMARY OF THE INVENTION

It is, therefore, an object of the present invention to provide a call processing method and a video communication terminal in a video communication network capable of providing real-time image data to a receiving video terminal before call connection in a communication with video terminals so that a receiver can easily identify the actual caller and select whether or not to enable the call connection based upon the real-time image data displayed on the receiving video terminal.

According to an aspect of the invention for realizing the above objects, there is provided a call processing method in a video communication network, comprising the following steps of: transmitting a first message from a first video terminal to a second video terminal via the video communication network, the first message containing call-related information of the first video terminal; transmitting a second message from the second video terminal to the first video terminal via the video communication network, the second message containing call-related information of the second video terminal; and transmitting real-time image data of a user of the first video terminal from the first video terminal to the second video terminal via the video communication network according to the call-related information of the second video terminal before call connection between the first and second video terminals.

The call processing method of the invention may further comprise the steps of: displaying, by the second video terminal, the image data transmitted from the first video terminal; and enabling or disabling the call connection between the first and second video terminal in response to the selection of a user of the second video terminal.

Preferably, the first message transmitted from the first video terminal to the second video terminal is a call setup message containing at least one selected from the group consisting of audio and video IP address information, port information and codec type information of the first video terminal, and wherein the second message transmitted from the second video terminal to the first video terminal is a call-proceeding message containing at least one selected from the group consisting of audio and video IP address information, port information and codec type information.

Preferably, the first and second video terminals uses a communication protocol selected from the group consisting of H.323, SIP (Session Initiation Protocol), and Media Gateway Control Protocols (MGCP or MEGACO/H.248) in order to transmit and receive the messages.

According to another aspect of the invention for realizing the above objects, there is provided a call processing method in a receiving video communication terminal, comprising the following steps of: receiving a first message from an originating video communication terminal via a video communication network, the message containing call-related information of the originating video communication terminal; transmitting a second message to the originating video communication terminal via the video communication network, the second message containing call-related information of the receiving video communication terminal; and receiving and displaying real-time image data of a user of the originating video communication terminal via the video communication network before call connection with the originating video communication terminal.

The call processing method of the invention may further comprise the step of selectively enabling call connection based upon the displayed real time image data.

Preferably, the first message received from the originating video communication terminal is a call setup message containing at least one selected from the group consisting of audio and video IP address information, port information and codec type information of the first video terminal, and wherein the second message transmitted to the originating video communication terminal is a call-proceeding message containing at least one selected from the group consisting of audio and video IP address information, port information and codec type information.

According to further another aspect of the invention for realizing the above objects, there is provided a call processing method in an originating video communication terminal, comprising the following steps of: transmitting a first message to a receiving video communication terminal via a video communication network, the first message containing call-related information of the originating video communication terminal; receiving a second message from the receiving video communication terminal via the video communication network, the second message containing call-related information of the receiving video communication terminal; and transmitting real-time image data of the originating video communication terminal to the receiving video communication terminal via the video communication network based upon the call-related information of the receiving video communication terminal before call connection with the receiving video communication terminal.

According to other aspect of the invention for realizing the above objects, there is provided a video communication terminal comprising: a transceiver for receiving a first message containing call-related information of an originating video communication terminal and image and audio data containing real-time image data of a caller from a video communication network, and transmitting a second message containing call-related information of the video communication terminal and video communication and audio data containing image data of the video communication terminal; a video processor for processing image data; an audio processor for processing audio data; a camera for generating image data; audio input/output unit for inputting and outputting audio data; a display unit for displaying the image data processed by the video processor; a key input unit for allowing user input; and a controller for controlling call setup and call connection, wherein the controller controls the display unit to display real-time caller image data from the originating video communication terminal upon receiving the real-time caller image data via the video communication network before call connection with the originating communication terminal.

Preferably, the controller is adapted to receive a call connection selection signal from the key input signal in response to the real-time caller image data displayed on the display unit and to enable or disable the call connection with the originating terminal.

Preferably, the first message received from the originating video communication terminal is a call setup message containing at least one selected from the group consisting of audio and video IP address information, port information and codec type information of the first video terminal, and wherein the second message transmitted to the originating video communication terminal is a call-proceeding message containing at least one selected from the group consisting of audio and video IP address information, port information and codec type information.

Preferably, the controller uses a communication protocol selected from the group consisting of H.323, SIP, MGCP and MEGACO in order to transmit and receive the messages to/from the originating video communication terminal.

### BRIEF DESCRIPTION OF THE DRAWINGS

A more complete appreciation of the present invention, and many of the attendant advantages thereof, will become readily apparent as the same becomes better understood by reference to the following detailed description when considered in conjunction with the accompanying drawings in which like reference symbols indicate the same or similar components, wherein:
FIG. 1 is a flowchart illustrating a conventional CID process in a video terminal;
FIG. 2 is a flowchart illustrating a conventional method for providing a caller image in a video terminal;
FIG. 3 schematically illustrates a video communication network structure of the present invention;
FIG. 4 is block diagram schematically illustrating the internal structure of a video terminal of the present invention;
FIG. 5 is a flowchart illustrating a call processing process in the video communication network of the present invention; and
FIG. 6 illustrates a format structure of call setup and call-proceeding messages as shown in FIG. 5.

### DETAILED DESCRIPTION OF THE PREFERRED EMBODIMENTS

Hereinafter preferred embodiments of call processing apparatus and method in a video communication network of the present invention will be described in detail with reference to the accompanying drawings.

In present days, communication networks are evolving from narrow band audio communication networks into wide band data communication networks. According to such evolution of the communication networks, a video communication capable of providing a video communication to users is being realized and established in both of wired and wireless communication networks.

The present invention is applicable to the video communication networks capable of providing the video communication. Herein the terminology "video communication network" refers to any communication networks including wired and wireless communication networks which can realize the video communication.

In addition, the terminology "video communication terminal" or "video terminal" used throughout the specification refers to any terminals including wired and wireless terminals which can display image data.

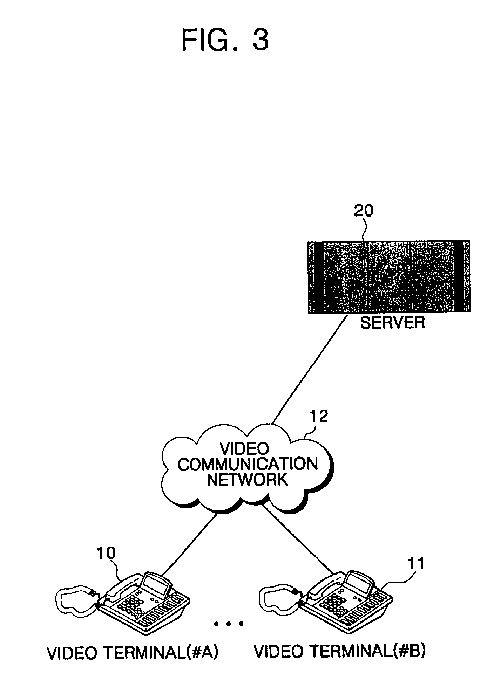

FIG. 3 schematically illustrates a video communication network structure of the present invention.

As shown in FIG. 3, the video communication network includes plural video terminals 10 and 11 and a server 20, in which each of the video terminals 10 and 11 can be connected to the server 20 via the video communication network 12. Examples of the video communication network 12 may be of wired/wireless networks including a mobile communication network and the Internet.

It is also to be understood that the server 20 refers to any equipment for performing call connection control, subscriber management and so on.

In describing the operation of the present invention, the video terminal 10 is a supposed calling video terminal, and the video terminal 11 is a supposed receiving video terminal.

The calling video terminal 10 transfers a call setup message to the server 20 via the video communication network 12 in order to request a call connection to the receiving video terminal 11.

The call setup message contains call-related data including call setup ID address, audio IP address and port information, video IP address and port information and codec information of the calling video terminal 10.

The server 20 receives the call setup message transmitted from the calling video terminal 10 via the video communication network 12, and then transmits the call setup message to the receiving video terminal 11.

Then, in response to the call setup message that is received via the server 20 from the calling video terminal 10, the receiving video terminal 11 transmits a call-proceeding message to the server 20. The call-proceeding message contains the audio IP address and port information, video IP address and port information and codec information of the receiving video terminal 11.

The server 20 transmits the call-proceeding message from the receiving video terminal 11 to the calling video terminal 10 via the video communication network 12.

This, as a result, causes the calling video terminal 10 to have information necessary for transmitting image and audio data to the receiving video terminal 11 based upon the audio IP address and port information and the video IP address and port information contained in the call-proceeding message. At the same time, this also allows the receiving video terminal 11 to have information necessary for transmitting image and audio data to the calling video terminal 10 based upon the audio IP address and port information and the video IP address and port information contained in the call setup message.

The call-proceeding message transmitted from the receiving video terminal 11 to the calling video terminal 10 functions to notify the current proceedings of a call but does not have any effect on the call status.

After transmitting the call-proceeding message, the receiving video terminal 11 transmits an alerting message to the server 20 via the video communication network 12, and the server 20 in turn transmits the alerting message from the receiving video terminal 11 to the calling video terminal 10 via the video communication network 12.

According to the alerting message, a ring back tone signal is generated to the calling video terminal 10 and a ring signal is generated to the receiving video terminal 11. If the receiving video terminal is subscribed to a CID service, the ID or name of the caller will be displayed on a display unit of the receiving video terminal 11.

In the meantime, since the calling video terminal 10 gets the audio and video ID address information, the port information and the codec information which are transmitted from the receiving video terminal 11, the calling video terminal 10 transmits, in real time, photograph data of the caller which are produced by photographing the caller, based upon the corresponding ID address and port information, to the receiving video terminal 11 via the video communication network 12.

As a result, a user examines the CID and the photograph data of the caller displayed on the receiving video terminal 11 and then selectively enables call connection with the caller.

When the receiving video terminal 11 takes a hook off, a connect message is transmitted from the receiving video terminal 11 to the calling video terminal 10 via the server 20 so that the calling and receiving video terminals 10 and 11 can transmit and receive audio and image data to each other to carry out a video/audio conversation.

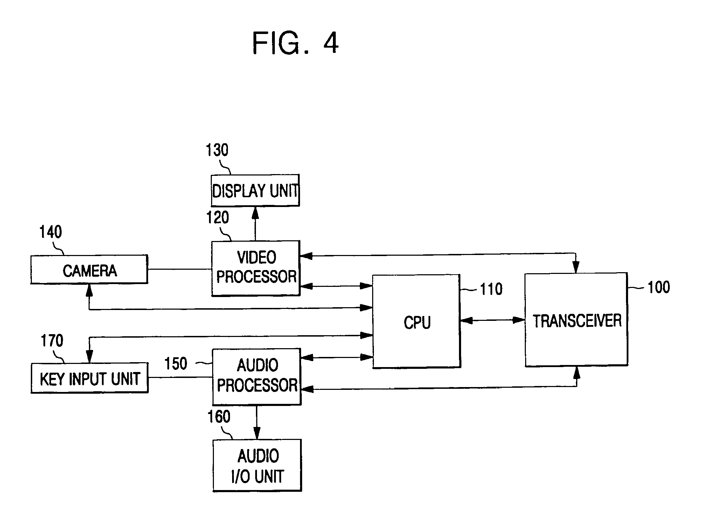

The internal structure and detailed operation of the above video terminals 10 and 11 will be described with reference to FIG. 4.

FIG. 4 is block diagram schematically illustrating the internal structure of a video terminal of the present invention.

As shown in FIG. 4, a video terminal includes a transceiver 100, a CPU 110, a video processor 120, a display unit 130, a camera 140, an audio processor 150, an audio Input/Output (I/O) unit 160 and a key input unit 170.

The camera 140 sends a photographed image of a caller to the video processor 120, and the key input unit 170 sends a key input signal for call connection to the CPU 110.

The transceiver 100 transmits a call connection request message containing call-related information, audio data (if any) and image data of the caller to a receiving terminal, and receives a call connection message containing call-related information, audio data and image data of the user of the receiving terminal, which are provided from the receiving terminal via server 20 and video communication network 12. In this case, each of the call-related messages transmitted and received by the transceiver 100 includes a call setup message or a call-proceeding message, and the call-related information contained in the each message contains audio IP address and port information, video IP address and port information and codec information of a corresponding terminal.

After the call connection with the receiving terminal, the video processor 120 compresses the image data of the user, which is provided from the camera 140, according to a codec type (compression protocol) and then sends the compressed data to the transceiver 100. Upon receiving compressed image data of the receiving terminal user from the transceiver 100, the video processor 120 decompresses the compressed image data so that the display unit 130 can display the image data of the receiving terminal user.

The audio processor 150 compresses audio data of the user provided from the audio I/O unit 160 using a preset compression protocol and then sends the compressed audio data to the transceiver 100, which in turn transmits the compressed audio data to the receiving terminal via the video communication network. Upon receiving a compressed audio data of the receiving terminal user via the transceiver 100, the audio processor 150 decompresses the compressed audio data according to a preset codec type so that the decompressed audio data can be outputted via the audio I/O unit 160.

When a call connection request message is inputted via the key input unit 170, the CPU 110 generates a call setup message containing the call-related information of the terminal in response to the call connection request message, and then sends the call setup message to the transceiver 100.

Upon receiving a call-proceeding message via the transceiver 100 in response to the call setup message transmitted to a counterpart video terminal and upon receiving a call setup message via the video communication network from a counterpart video terminal, the CPU 110 generates a call-proceeding message containing the call-related information of its own video terminal in response to the received call setup message, and then transmits the call-proceeding message to the counterpart video terminal.

The CPU 110 can use a communication protocol selected from the group consisting of H.323, SIP, MGCP and MEGACO in order to transmit and receive the messages to and from the counterpart video terminal.

The call processing operation in the video terminal of the above structure will be described in more detail.

On the supposition that the video terminal shown in FIG. 4 is an calling video terminal, the operation of the calling video terminal will be described as follows:

First, when a user makes a call connection request with the key input unit 170, the CPU 110 generates a call setup message containing the call-related information of the calling video terminal, and then sends the call setup message to the transceiver 100. Then, the transceiver 100 transmits the call setup message from the CPU 110 to a receiving video terminal via the video communication network.

In response to the call setup message, the receiving video terminal transmits a call-proceeding message containing the call-related information of the receiving video terminal to the calling video terminal via the video communication network.

The transceiver 100 of the calling video terminal stores the call-related information of the receiving video terminal contained in the call-proceeding message which is provided from the receiving video terminal via the video communication network.

In the meantime, after transmitting the call-proceeding message to the calling video terminal, the receiving video terminal transmits an alerting message to the calling video terminal via the video communication network. Herein the alerting message functions to generate a ring back tone signal to the calling video terminal and/or a ring signal to the receiving video terminal.

As the ring back tone signal is generated to the calling video terminal and the ring signal is generated to the receiving video terminal as above, the CPU 110 of the calling video terminal controls the camera 140 to photograph a caller image and then sends a caller image data obtained from the camera 140 to the video processor 120.

The video processor 120 compresses the caller image data from the camera 140 according to a preset codec type or a preset compression protocol, and then sends the compressed caller image to the transceiver 100.

Then, the transceiver 100 transmits the compressed caller image data from the video processor 120 to the receiving video terminal via the video communication network.

Upon receiving the compressed caller image data via the video communication network, the receiving video terminal displays the caller image data so that a receiver (user) examines the displayed caller image data to judge whether or not to enable call connection.

When the receiver enables call connection after examining the displayed caller image data, the calling video terminal is call-connected with the receiving video terminal so that the caller and the receiver can have an audio and video conversation.

Now a call processing operation will be described on assumption that the video terminal as shown in FIG. 4 is a receiving video terminal.

First, when the transceiver 100 receives a call setup message for call connection from an calling video terminal via the video communication network, in which the call setup message contains the call-related information of the calling video terminal, the CPU 110 stores the call-related information of the calling video terminal contained in the call setup message.

Upon receiving the call setup message, the CPU 110 of the receiving video terminal generates a call-proceeding message containing the call-related information of the receiving video terminal and transmits the call-proceeding message via the transceiver 100 to the calling video terminal. Herein the call-related information contained in the call-proceeding message transmitted to the calling video terminal includes audio IP address and port information, video IP address and port information and codec information of the receiving video terminal.

The CPU 110 of the receiving video terminal generates an alerting message and transmits the alerting message to the calling video terminal via the visual communication terminal. Herein the alerting message functions to generate a ring signal to the receiving video terminal and a ring back tone signal to the calling video terminal.

As the ring signal is generated to the receiving video terminal and the ring back tone signal is generated to the calling video terminal, the calling video terminal photographs the image of the caller and transmits a compressed image data to the receiving video terminal via the video communication network.

Thus, upon receiving the image data of the caller transmitted from the originating terminal via the video communication network, the transceiver 100 of the receiving video terminal sends the image data to the video processor 120.

The video processor 120 of the receiving video terminal decompresses the compressed image data according to a preset protocol, that is, its own codec type, and displays the caller image data in real time on the display unit 130.

When the caller image data is displayed on the display unit 130 of the receiving video terminal as above, the receiver examines the displayed image information of the caller to judge whether or not to enable call connection. If the receiver enables the call connection, an audio and video conversation is performed between the calling video terminal and the receiving video terminal.

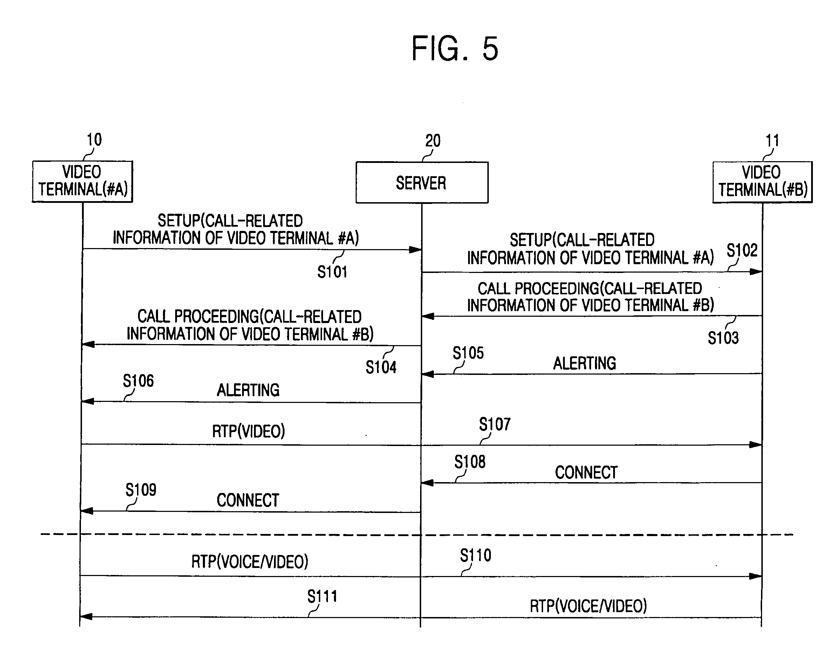

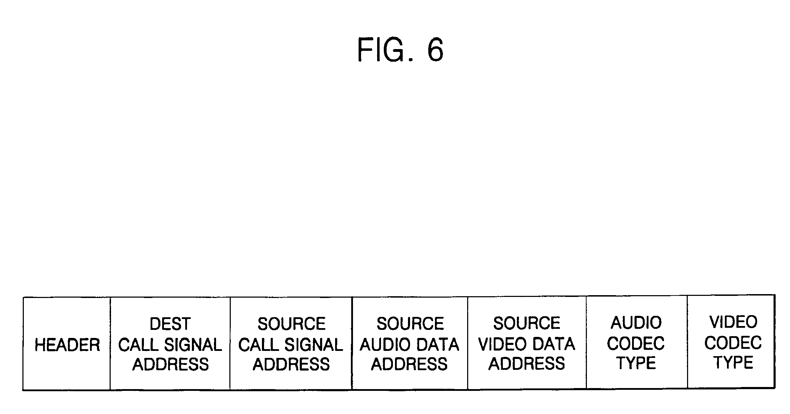

A call processing method in the video communication network including the video terminals as set forth above will be described in a stepwise fashion with reference to FIGS. 5 and 6.

FIG. 5 illustrates message transmitting and receiving flows in a call processing process in the video communication network of the present invention, which can use a communication protocol selected from the group consisting of H.323, SIP, MGCP and MEGACO in order to transmit and receive the messages to/from the counterpart video terminal, and FIG. 6 illustrates a format structure of call setup and call-proceeding messages as shown in FIG. 5.

As shown in FIG. 5, the calling video terminal 10 first transmits a "call setup message" to the server 20 via the video communication network to establish a call connection with the receiving video terminal 11 in S101. As shown in FIG. 6, the call setup message format includes destination call signal address, source call signal address, source audio data address, source video data address, audio codec type and video codec type. That is, the call setup message contains IP address information for telephone number setup, audio IP address and port information, video IP address and port information and audio/video codec information of the calling video terminal 10. In the meantime, each address information contains port information necessary for the receipt of signals and/or data.

The server 20 receives the "call setup message" from the calling video terminal 10, and transmits the "call setup message" to the receiving video terminal 11 via the video communication network in S102.

Upon receiving the "call setup message" from the server 20, the receiving video terminal 11 transmits a "call-proceeding message" to the server 20 in response to the call-related information of the calling video terminal 10 contained in the received "call setup message" in S 103. Herein the "call-proceeding message" transmitted from the receiving video terminal 11 to the server 20 may have a format the same as that of the "call setup message." That is, the "call-proceeding message" contains audio IP address and port information, video ID address and port information and codec information of the receiving video terminal 11.

The server 20 transmits the "call-proceeding message" from the receiving video terminal 11 to the calling video terminal 10 via the video communication network in S104.

After transmitting the "call-proceeding message", the receiving video terminal 11 transmits an "alerting message" to the server 20 via the video communication network in S105, and the server 20 transmits the message from the receiving video terminal 11 to the calling video terminal 10 via the video communication network in S106.

Herein the alerting message functions to generate a ring back tone signal to the calling video terminal and a ring signal to the receiving video terminal. In this case, if the receiving video terminal 11 is subscribed to a CID service, the ID or name of the caller will be displayed on the display unit of the receiving video terminal 11.

In response to the "alerting message" from the receiving video terminal 11, the calling video terminal 10 transmits image data according to a Real Time Protocol (RTP) to the receiving video terminal 11 via the video communication network. In this case, the calling video terminal 10 transmits the image data in real time to the receiving video terminal based upon the video IP address and port information from the receiving video terminal 11 in S107.

Then, the receiving video terminal 11 displays the image data received from the calling video terminal 10 via the video communication network so that a receiver can examine or identify the caller's image data displayed on the receiving video terminal 11 and judge whether or not to enable call connection.

If the receiving video terminal 11 is subscribed to a CID service, the telephone number and/or name of the caller can be displayed on the receiving video terminal 11.

As the caller image data is displayed in real time, when the receiver enables the call connection with the calling video terminal 10 by taking a hook off of the receiving video terminal 11, the receiving video terminal 11 transmits a "connect message" to the server 20 via the video communication network in S 108.

Then, the server 20 transmits the "connect message" from the receiving video terminal 11 to the calling video terminal 10 via the video communication network in S109.

As an audio and video call is connected between the calling video terminal 10 and the calling video terminal 11, the originating and receiving video terminals 10 and 11 transmit and receive RTP image and audio data to/from each other based upon the IP address and port information received on the "call setup/proceeding messages" to perform the audio and video conversation in S110. When the call is connected, the originating and receiving video terminals 10 and 11 transmit and receive the audio and image data to/from each other directly via the video communication network without going through the server 20.

While it has been described that the call-related information of the receiving video terminal 11 is transmitted on the "call-proceeding message" to the calling video terminal 10, the call-related information of the receiving video terminal 11 can be transmitted on the "alerting message" to the calling video terminal 10. That is, the call-related information of the receiving video terminal 11 is transmitted to the calling video terminal 10 before the call connection is realized between the originating and receiving video terminals 10 and 11.

As a result, according to the call processing apparatus and method in the video communication network of the present invention, when a ring signal is generated to a receiving video terminal in the call connection between the receiving video terminal and an calling video terminal, real-time dynamic or still image data of the caller is transmitted to the receiving terminal which in turn displays the image data thereon so that a receiver can easily identify an actual caller based upon the displayed dynamic or still image of the caller in order to selectively enable a call connection with the identified caller.

As set forth above, when a ring signal is generated to the receiving video terminal in the call connection between the receiving video terminal and the calling video terminal, the call processing apparatus and method in the video communication network of the present invention transmits real-time dynamic or still image data of the caller to the receiving terminal which in turn displays the image data thereon so that the receiver can easily identify an actual caller based upon the displayed dynamic or still image of the caller to selectively enable a call connection with the identified caller, thereby promoting the convenience of users.

## Claims

1. A call processing method in a video communication network, comprising steps of:
transmitting a first message from a first video terminal to a second video terminal via the video communication network, the first message containing call-related information of the first video terminal;
transmitting a second message from the second video terminal to the first video terminal via the video communication network, the second message containing call-related information of the second video terminal; and
transmitting real-time image data of a user of the first video terminal from the first video terminal to the second video terminal via the video communication network according to the call-related information of the second video terminal before call connection between the first and second video terminals.

2. The call processing method in a video communication network according to claim 1, further comprising steps of:
displaying, by the second video terminal, the image data transmitted from the first video terminal; and
enabling or disabling the call connection between the first and second video terminal in response to a selection of a user of the second video terminal.

3. The call processing method in a video communication network according to claim 2, wherein the first message transmitted from the first video terminal to the second video terminal is a call setup message containing at least one selected from a group consisting of audio and video IP address information, port information and codec type information of the first video terminal, and wherein the second message transmitted from the second video terminal to the first video terminal is a call-proceeding message containing at least one selected from a group consisting of audio and video IP address information, port information and codec type information.

4. The call processing method in a video communication network according to claim 1, wherein the first and second video terminals use a communication protocol selected from a group consisting of H.323, SIP, MGCP and MEGACO in order to transmit and receive the messages.

5. A call processing method in a receiving video communication terminal, comprising the following steps of:
receiving a first message from an originating video communication terminal via a video communication network, the message containing call-related information of the originating video communication terminal;
transmitting a second message to the originating video communication terminal via the video communication network, the second message containing call-related information of the receiving video communication terminal; and
receiving and displaying real-time image data of a user of the originating video communication terminal via the video communication network before call connection with the originating video communication terminal.

6. The call processing method in a receiving video communication terminal according to claim 5, further comprising the step of selectively enabling call connection based upon the displayed real time image data.

7. The call processing method in a receiving video communication terminal according to claim 7, wherein the first message received from the originating video communication terminal is a call setup message containing at least one selected from a group consisting of audio and video IP address information, port information and codec type information of the first video terminal, and wherein the second message transmitted to the originating video communication terminal is a call-proceeding message containing at least one selected from a group consisting of audio and video IP address information, port information and codec type information.

8. A call processing method in an originating video communication terminal, comprising the following steps of:
transmitting a first message to a receiving video communication terminal via a video communication network, the first message containing call-related information of the originating video communication terminal;
receiving a second message from the receiving video communication terminal via the video communication network, the second message containing call-related information of the receiving video communication terminal; and
transmitting real-time image data of the originating video communication terminal to the receiving video communication terminal via the video communication network based upon the call-related information of the receiving video communication terminal before call connection with the receiving video communication terminal.

9. The call processing method in an originating video communication terminal according to claim 8, wherein the first message transmitted to the receiving video communication terminal is a call setup message containing at least one selected from a group consisting of audio and video IP address information, port information and codec type information of the first video terminal, and wherein the second message received from the receiving video communication terminal is a call-proceeding message containing at least one selected from a group consisting of audio and video IP address information, port information and codec type information.

10. A video communication terminal comprising:
a transceiver for receiving, from a server of a video communication network, a first message containing call-related information of an originating video communication terminal, said transceiver supplying a reply message to said originating video communication terminal through said server and receiving real-time image data of a caller from said originating video communication terminal in response to said reply message; and
a controller for controlling call setup and call connection, said controller controlling a display unit to display said real-time image data of said caller upon receiving the real-time caller image data via the server before establishing a call connection with the originating communication terminal.

11. The video communication terminal according to claim 10, said transceiver being disposed within a second video communication terminal, wherein said reply message contains call-related information of the second video communication terminal and video communication and audio data containing image data of the video communication terminal.

12. The video communication terminal according to claim 10, said transceiver being disposed within a second video communication terminal, said reply message being a ring-back signal.

13. The video communication terminal according to claim 12, wherein said a ring-back signal includes call-related information of the second video communication terminal and video communication and audio data containing image data of the video communication terminal.

14. The video communication terminal according to claim 10, further comprising:
a video processor for processing image data;
an audio processor for processing audio data;
a camera for generating real time image data;
an audio input/output unit for inputting and outputting audio data;
a display unit for displaying the image data processed by the video processor; and
a key input unit for allowing user input.

15. The video communication terminal according to claim 10, wherein the controller provides a call connection signal to said originating communication terminal via said server for establishing said call connection with the originating communication terminal, said call connection being established over said video communication network while bypassing said server.

16. The video communication terminal according to claim 14, wherein the controller is adapted to receive a call connection selection signal from the key input unit, when the user desires to establish said call connection in response to the real-time image data of the caller being displayed on the display unit.

17. The video communication terminal according to claim 10, wherein the first message received from the originating video communication terminal is a call setup message containing at least one selected from a group consisting of audio and video IP address information, port information and codec type information of the first video terminal, and wherein the reply message transmitted to the originating video communication terminal is a call-proceeding message containing at least one selected from a group consisting of audio and video IP address information, port information and codec type information.

18. The video communication terminal according to claim 10, wherein the controller uses a communication protocol selected from a group consisting of H.323, SIP, MGCP and MEGACO in order to transmit and receive the messages to/from the originating video communication terminal.
